# EUROPÄISCHE PATENTSCHRIFT

(11) **EP 2 451 329 B1**
(45) Veröffentlichungstag und Bekanntmachung des Hinweises auf die Patenterteilung: **19.09.2012**
(21) Anmeldenummer: 10740134.1
(22) Anmeldetag: 12.06.2010
(51) Int. Cl.: A47J 43/28

(54) **GRILLZANGE MIT HITZESCHILD**
GRILL TONGS HAVING A HEAT SHIELD
PINCE À GRIL AVEC PROTECTION THERMIQUE

(30) Priorität: 10.07.2009 DE 102009032554
(43) Veröffentlichungstag der Anmeldung: 16.05.2012
(73) Patentinhaber: Janocha, Daniel, 97078 Würzburg (DE)
(72) Erfinder: Janocha, Daniel, 97078 Würzburg (DE)
(74) Vertreter: Pöhner, Wilfried Anton
(86) Internationale Anmeldenummer: PCT/DE2010/000665
(87) Internationale Veröffentlichungsnummer: WO 2011/003377

(56) Entgegenhaltungen:
- DE-A1- 19 819 084
- DE-U1-202008 014 161
- US-A- 4 768 288

## Beschreibung

Die Erfindung bezieht sich auf eine Grillzange, bestehend aus zwei Stäben, die beweglich miteinander verbunden sind und die gegeneinander verschwenkbar sind und die jeweils an ihrem grillnahen Ende eine Greiffläche für ein Grillgut aufweisen und die an ihrem grillfernen Ende mit einem Griff ausgestattet sind, der als Kontaktfläche für die Finger eines Benutzers dient *und am Stab im Bereich des Griffes ein Hitzeschild angeordnet ist, das an der zangeninneren Seite des Stabes befestigt ist und das sich von dort aus um die nach außen weisende Seite des Griffes herum wölbt und das dabei zum Griff beabstandet ist.*

Zum Zubereiten von Würstchen, Fleisch, sogenannten Spießen, also Fleischstücken, die auf einem länglichen Spieß aufgereiht sind oder anderen Nahrungsmitteln ist es eine bekannte und weit verbreitete Technik, diese auf ein Gitter aufzulegen, dass in sehr geringem Abstand oberhalb einer Wärmequelle, wie z. B. eines Holzkohlenfeuers angeordnet ist. Die von dem Holzkohlenfeuer ausgestrahlte Wärme sowie in geringerem Anteil die von diesem Feuer erwärmte Luft erhitzt das Grillgut bis in sein Inneres und erzeugt auf der äußeren Fläche eine Kruste, die als eine wohlschmeckende Ergänzung des durchgegarten, inneren Bereiches vom Grillgut eingestuft wird.

Dabei muss die von der Wärmequelle ausgehende Temperatur so hoch sein, dass der Garprozess innerhalb des Grillgutes ablaufen kann. Diese Temperatur ist so hoch, dass sie zu Verbrennungen an der Hand eines Benutzers führen würde, welcher das Grillgut unmittelbar berührt. Deshalb ist es erforderlich, dass zum Auflegen, zum Wenden und zum Abnehmen des Grillgutes ein Werkzeug eingesetzt wird. Für diese Aufgabe sind unter anderem Zangen oder scherenartige Werkzeuge weit verbreitet. Sie bestehen aus zwei Stäben, an deren zum Grill hinweisenden Ende zwei Greifflächen angeordnet sind, mit denen das Grillgut kontaktiert und aufgenommen wird. An den beiden anderen Enden der Stäbe sind Griffe angeordnet oder angeformt, mit denen der Benutzer die Grillzange aufnimmt und bewegt. Durch die Länge der Stäbe wird erreicht, dass die Hand des Benutzers einen Abstand zu der Wärmequelle einnimmt. Mit zunehmendem Abstand nimmt die Strahlungsintensität der Wärmequelle ab. Eine Einschränkung ist jedoch, dass über die gesamte Fläche des Grills hinweg eine so hohe Hitze abgestrahlt wird, dass an allen Punkten Fleisch gegart werden kann. Das führt dazu dass auch an allen Punkten des Grills trotz des erhöhten Abstandes der Benutzerhand von der Oberfläche des Grills dennoch Verletzungen möglich sind, wenn der Abstand der Benutzerhand zur Grillfläche immer noch relativ gering ist.

Auf aktuellem Stand der Technik beschreibt die DE 196 22 352, Steubing, eine Grillzange, die aus zwei L-förmigen Elementen besteht, die über zwei Gelenkpunkte zu einer L-förmigen Zangeneinheit verbunden werden. Zwar wird damit erreicht, dass die Hand des Benutzers nicht mehr im Strahlungsbereich des Grills ist, aber das entstehende Gebilde ist relativ groß und unhandlich, wodurch der Benutzer stets eine im Vergleich zum Grillgut sehr große Masse zu hantieren hat. Darunter leidet nicht nur der subjektiv empfundene Komfort, sondern dadurch wird auch die mit dem Gerät erreichte Positioniergenauigkeit in unnötiger Weise eingeschränkt, was in letzter Konsequenz ein ungleichmäßig gegartes Grillgut zur Folge haben kann.

Um den Nachteil der allzu langen Stäbe dieser Grillzange zu vermeiden, sind andere Lösungen bekannt, die nur recht kurze Stäbe vorschlagen, mit denen ein einwandfreies Hantieren des Grillgutes möglich ist. Weil dabei jedoch die Hand des Benutzers in den Strahlungsbereich des Grills kommen kann, schlägt die Gebrauchsmusterschrift DE 20 2005 014 573, Schluch, vor, dass ein Hitzeschutzschild die Handgriffe der Grillzange überdeckt. Dieses Hitzeschutzschild ist sowohl für die Neuausrüstung als auch zur Nachrüstung von bereits verwendeten Grillzangen gedacht. Es besteht aus einer kastenartigen Umbauung der Benutzerhand mit einem Schlitz zum Durchführen der Zange. Der Benutzer wird jedoch mit der Aufgabe alleine gelassen, wie dieses Schild mit der Zange zu verbinden ist, sodass er im ungünstigsten Fall nicht nur auf die Bewegung des Grillgutes zu achten hat, sondern auch noch darauf, dass das Hitzeschild sich nicht verschiebt oder sogar herunter fällt.

Das Patent US 4, 768, 288 beschreibt eine Zange zum Aufnehmen von Lebensmitteln, die mit einem Schild versehen ist, das die benutzende Hand vor einer Berührung mit den Lebensmitteln schützt. Das Schild besteht entweder aus einem U-förmigen Blech, das an der Schwenkachse der beiden Stäbe der Zange befestigt ist und das je einen Schlitz in seinen Schenkeln aufweist, durch welche die Stäbe der Zange hindurch geführt werden. Alternativ besteht das Schild aus zwei Griffmulden, die jeweils an einem Stab befestigt sind.

Nachteilig ist, dass beide Ausführungsformen des Schildes relativ zur Zange sehr aufwendig sind. Ein weiterer Nachteil ist, dass diese Zange nur dann vor der Berührung der Lebensmittel schützt, wenn die Schwenkachse der beiden Zangen etwa senkrecht zu der Oberfläche der Lebensmittel ausgerichtet ist.

Der wesentlichste Nachteil ist, dass bei parallel zur Oberfläche der Lebensmittel ausgerichteter Schwenkachse eine Berührung der Lebensmittel mit der Hand möglich und wahrscheinlich ist.

Bei einer Benutzung als Grillzange ist in dieser Position der größte Teil der Hand der Hitzestrahlung des Grills ungeschützt ausgesetzt, und zwar für beide Ausführungsformen.

Bei der Variante mit den Griffschalen an den Stäben der Zange strahlt die Hitze des Grills zwischen den Stäben der Zange hindurch auf die ungeschützte Hand, wenn die Schwenkachse der Zange senkrecht zur Oberfläche der Lebensmittel orientiert ist.

Auf diesem Hintergrund hat sich die Erfindung die Aufgabe gestellt, für eine Grillzange ein Hitzeschutzschild zu entwickeln, das einfach und kostengünstig an einer Grillzange angeordnet werden kann, zumindest den wesentlichen Teil der Hand des Benutzers vor Strahlungswärme vom Grill schützen kann, ihn aber beim Aufnehmen und beim Benutzen der Zange möglichst wenig behindert und seine Hand intuitiv in eine thermisch sinnvolle Position führt, wobei die Schwenkachse der Grillzange in Bezug auf den Grill beliebig orientiert werden kann.

Als Lösung lehrt die Erfindung, dass das Hitzeschild ein Hohlzylindersegment ist, dessen Profil etwa ¾ eines Kreises ist und dessen Tangente an der Stelle der Befestigung am Griff etwa parallel zur Schwenkachse der beiden Stäbe verläuft.

Das wesentliche Merkmal der Erfindung ist also, dass an nur einem einzigen der beiden Stäbe einer Grillzange ein Hitzeschutzschild befestigt wird, was damit korrespondiert, dass der größere Teil der Hand eines Benutzers, nämlich die vier Finger vom Zeigefinger bis zum kleinen Finger gemeinsam einen Griff umfassen und es sinnvoll ist, primär diesen größeren Teil der Hand zu schützen. Auf der gegenüberliegenden Seite der Grillzange am anderen Stab greift "nur" der Daumen an.

In der Regel wird er jedoch nicht direkt der Strahlung des Grills ausgesetzt sein, wenn nämlich die Grillzange so benutzt wird, dass die Schwenkachse zwischen den beiden Stäben etwa parallel zur Oberfläche des Grills verläuft. Dann greift die eine Greiffläche das Grillgut von seiner Unterseite an, indem sie sich wie ein Keil zwischen den Grill und das Grillgut schiebt. Die andere Greiffläche befindet sich dann oberhalb dieser ersten Greiffläche. Ebenso befindet sich dann der nicht durch ein zusätzliches Hitzeschild geschützte Daumen oberhalb "seines" Griffes sowie auch oberhalb des unteren Griffes sowie des einzigen Hitzeschildes. Da diese Elemente schon für sich gesehen Strahlungs- und Konvektionswärme abhalten, wird der nach oben weisende Daumen bereits geschützt. Zusätzlich genießt er auch noch den Wärmeschutz durch das einzige Hitzeschild, das erheblich breiter als die Griffe ist.

Die vier Finger, die an der dann nach unten weisenden Seite der Grillzange aufliegen, sind durch den Hitzeschild von der Strahlungswärme des Grills geschützt.

Sinnvollerweise ist der Abstand zwischen dem Hitzeschild und der Grifffläche so groß, dass nicht nur die Finger auch einer etwas größeren Hand darin Platz finden, sondern dass sie zusätzlich noch zu diesen Fingern beabstandet sind. Dadurch wird das Aufnehmen der Zange erleichtert und dadurch wird sich bei der Nutzung eine Luftschicht zwischen dem Hitzeschild und den Fingern ausbilden, die als zusätzliche Isolationsschicht dient.

Sollte die Grillzange jedoch einmal ausnahmsweise so genutzt werden, dass ihre Schwenkachse etwa senkrecht zur Grilloberfläche ausgerichtet ist, so werden die vier Finger der Hand nach wie vor durch den Hitzeschild geschützt. Der Daumen der Hand des Benutzers der auf dem anderen Griff aufliegt, wird dann noch zum Teil zumindest durch den Griff selbst von Strahlungswärme abgehalten; nur die Fingerkuppe ist der Strahlungswärme ausgesetzt.

Erfahrungsgemäß kann diese Erwärmung eines kleineren Teils der Handfläche durch eine verstärkte Durchblutung des erwärmten Bereiches ausgeglichen werden, da sich die erwärmte Blutmenge sofort in den benachbarten, kühleren Bereichen wieder abkühlt.

Diese bewusst von der Erfindung gewählte, geringfügige Einschränkung vereinfacht jedoch die Bedienung und die Herstellung einer erfindungsgemäßen Grillzange erheblich: Die relativ große Öffnung zwischen dem Hitzeschild und dem davon umgebenen Griff fordert intuitiv zum Einschieben der vier Finger auf, da sie deren Größe entspricht. Das entspricht auch dem Reflexhaften, menschlichen Schutzbedürfnis, erst einmal den größten Teil der Handfläche zu schützen. Ein weiterer Vorteil ist, dass das Auflegen des Daumens dann subjektiv nicht mehr durch einen Hitzeschild beeinträchtigt ist, sondern voll im Sichtbereich liegt.

Ein weiterer Vorteil ist, dass bei Nutzung der Grillzange am ausgestreckten Arm und bei Ausrichtung der Grillzange etwa in Verlängerung des Arms, die Sicht auf das zu handhabende Grillgut direkt vorbei an dem oberen Griff mit dem darauf liegenden Daumen nicht durch ein Hitzeschild eingeschränkt ist, was die Sicherheit bei der Handhabung erheblich unterstützt.

Vorteilhaft im Gegensatz zum bekannten Stand der Technik ist auch, dass nur ein einziges Hitzeschild benötigt wird, dass sich also der Mehrpreis für das Hitzeschild halbiert.

Da die um den unteren Griff gekrümmten vier Finger vom Zeigefinger bis zum kleinen Finger in erster Annäherung eine zylindrische Form einnehmen, ist es erfindungsgemäss, dass auch das Hitzeschild als ein Hohlzylindersegment ausgeführt wird. Dessen Profil ist erfindungsgemäss etwa ¾ eines Kreises. Das verbleibende, "freie" Teil des Kreises bildet die Öffnung, durch welches die Finger in den Schutzbereich des Hitzeschildes hineingeschoben werden.

Dieses Profil sollte - wie erwähnt - einen so großen Abstand zum Griff aufweisen, dass nicht nur die Finger der Hand darin eingeschoben werden können, sondern ein zusätzlicher Luftraum verbleibt, der eine weitere isolierende Schicht darstellt.

Zur Befestigung dieses Profils ist es mit einer Längskante mit der nach innen weisenden Seite des Griffes verbunden. Dort verläuft eine Tangente an das Profil etwa parallel zur Schwenkachse der Zange.

Alternativ kann das Profil des Hitzeschildes jedoch auch als eine Spirale ausgeführt werden, wobei in der Nähe der Befestigung des Hitzeschildes deren Abstand zum Stab kleiner ist als am befestigungsfernen Ende des Hitzeschildes. Dadurch reduziert sich der Abstand des Hitzeschildes vom Griffes kontinuierlich. Wie ein "eingerollter" Trichter dient er so für eine ergonomisch sinnvolle Führung der Finger beim Einschieben zwischen Griff und Hitzeschild.

Alternativ zu einer stetig gekrümmten Spirale kann das Profil des Hitzeschildes auch durch ein Polygon angenähert werden, wodurch die Herstellung, insbesondere kleinerer Stückzahlen, weiter vereinfacht wird.

In jedem Fall ist es unabhängig von der Form des Hitzeschildes ein ganz wesentlicher Vorteil, dass die Hand des Nutzers nicht durch zusätzliche Isolationen - wie z.B. einen Grillhandschuh - vor der Hitze des Grills bewahrt werden muss, sondern zwangsläufig mit dem Aufnehmen der Grillzange die Hand zugleich auch gegen Strahlungs- und Konvektionswärme vom Grill schützt.

Da die Masse des Hitzeschildes einen wesentlichen Anteil am Gesamtgewicht der Grillzange hat, befindet sich auch der Schwerpunkt der gesamten Grillzange innerhalb des Hitzeschildes. Deshalb ist es eine wirkungsvolle Variante, dass in das Hitzeschild wenigstens eine Ebene eingeformt ist, die zur Ablage der gesamten Zange nutzbar ist. Diese Ebene ergibt sich bei einer polygonalen Formung des Hitzeschildes ohne weiteren Aufwand. Nur bei gleichmäßig gekrümmten Hitzeschilden ist es nötig eine Ebene einzuformen oder als zusätzliches Bauteil mit einer einzigen Standfläche oder mit mehreren kleineren Standflächen anzubringen.

Ein Hohlzylindersegment als Hitzeschild ist im einfachsten Fall ein entsprechend gekrümmtes oder abgekantetes Blech. Zusätzlich kann es durch eine quer zu seiner Längsachse ausgerichtete Wand verschlossen werden. Insbesondere die zu den Griffflächen und damit zur Hitze des Grills weisenden Seite ist sinnvoller Weise zu verschließen, da dadurch der Wärmeschutz verbessert wird. Eine solche "Querwand" dient auch zur zusätzlichen Versteifung des Hitzeschildes.

Prinzipiell ist es möglich, auch an der anderen, vom Grill weg weisenden Seite eine solche Querwand anzubringen. In einer sehr einfachen Ausführung ist sie jedoch entbehrlich, unter anderem auch deshalb, weil dadurch der Luftaustausch innerhalb des Hitzeschildes und damit die zusätzliche Kühlung der darin befindlichen Finger verbessert wird.

Eine erfindungsgemäße Grillzange ist in zwei prinzipiell unterschiedlichen Varianten ausführbar: Einmal - so wie z. B. von einer Pinzette bekannt - mit der Schwenkachse am grillfernen Ende der beiden Stäbe. Alternativ dazu - ähnlich wie z. B. bei einer Papierschere - mit einer Schwenkachse, die zwischen den Griffen und den Greifflächen der Grillzange angeordnet ist.

Wenn die Grillzange ähnlich wie eine Pinzette geformt ist, dann ist es eine sinnvolle Variante, dass die Funktionen der Schwenkachse und des Federelementes durch einen etwa U-förmigen, dauerhaft elastischen Metallstreifen ausgeführt werden, an dessen beiden Enden je ein Stab befestigt ist. Dieser Metallstreifen muss dauerhaft elastisch sein, also z. B. aus federndem Blech oder entsprechendem Kunststoff bestehen. Eine sinnvolle Ausführungsvariante ist z. B. ein Blechstreifen, an den Holzstäbe angenietet oder angeschraubt sind. Die Holzstäbe können dann mit einem angeformten Griffbereich versehen werden.

Eine andere Ausführungsform besteht aus einem Metallstreifen, an dessen beiden Enden je eine Greiffläche angeformt ist und der in der Mitte U-förmig umgebogen ist. Um den federnden Bereich in der Mitte von den möglichst unelastischen, länglichen Bereichen zwischen der Schwenkachse und den Greifflächen abzugrenzen, ist es sinnvoll, dass diese Bereiche in ihrer Längsrichtung profiliert sind, also z. B. entlang den Kanten verlaufende Streifen abgewinkelt sind. Durch dieses U-förmige Profil sind die Stäbe erheblich steifer als der kurze Bereich in der Mitte, der U-förmig geformt ist und durch elastisches Federn als Schwenkachse dient.

In der erwähnten, anderen Alternative ist die Schwenkachse zwischen den Greifflächen und den Griffen angeordnet. Ein Vorteil dieser Anordnung ist, dass dann auf die Federkraft verzichtet werden kann, die die beiden Stäbe bei Nichtbenutzung auseinander drückt. Dann muss die Kraft zum "Öffnen" der Schere durch Zugkräfte auf die beiden Griffe aufgebracht werden. Dazu müssen beide Griffe - wie von Scheren bekannt - mit je einer Öffnung versehen werden. In die eine Öffnung greift der Daumen und in die andere Öffnung greifen die anderen vier Finger der Benutzerhand ein. Daraus folgt, dass die Öffnung für den Daumen in Längsrichtung der Stäbe kleiner ist als die Öffnung für die vier Finger. Die Öffnung für die vier Finger sollte wenigstens etwa doppelt so lang sein wie die andere Öffnung für den Daumen.

In beiden Ausführungsformen gibt die Befestigung des Hitzeschildes vor, ob die Grillzange mit der rechten oder mit der linken Hand benutzt werden kann. Damit sowohl Linkshänder als auch Rechtshänder eine Grillzangen benutzen können, ist es sinnvoll, dass das Hitzeschild vom Benutzer mit einfachen Mitteln gelöst und auf der anderen Seite wieder befestigt werden kann. Das kann z. B. durch eine Schraubverbindung erreicht werden. Falls die Grillzange jedoch sehr schnell von einem Rechtshänder zu einem Linkshänder wechseln soll, sind Steck- oder Rastverbindungen zu bevorzugen.

Unabhängig davon ist es sinnvoll, dass der Griff thermisch von dem Stab und von dem Hitzeschild isoliert ist. Er kann durch wenigstens eine Schraube und/oder einen Dübel und/oder eine Niete und/oder einen angeformten Stift mit einer Querbohrung und einem Keil und/oder einer Klebstoffschicht und/oder einer umgebogenen Blechlasche mit wenigstens einem der beiden Elemente verbunden werden.

In einer weiteren Ausführungsvariante sind die Greifflächen jeweils als ein längliches Element geformt, deren Längsachsen gegenüber der Längsachse der jeweiligen Stäbe in einem Winkel verlaufen und deren freie Enden in Bezug auf die Stäbe in die gleiche Richtung weisen, wie die geschlossene Seite des Hitzeschildes. Wenn die Grillzange so genutzt wird, dass ihre Schwenkachse senkrecht zur Oberfläche des Grills ausgerichtet ist, dann weisen die länglichen und "abgewinkelten" Greifflächen nach unten auf die Grillfläche hin. Dann ist es ein Vorteil, dass die Stäbe und damit auch die Längsachse des Hitzschildes etwa parallel zur Oberfläche des Grills verlaufen, weil dadurch in die vordere, offene Stirnseite des Hitzeschildes keine Strahlungswärme eindringt und den Zeigefinger der Hand des Nutzers erwärmt oder überhitzt.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:
- Figur 1: Erfindungsgemäße Grillzange mit einem Hitzeschild am ersten Stab
- Figur 2: Grillzange wie in Figur 1, jedoch von der Hand eines Benutzers aufgenommen

Die Figuren zeigen im Einzelnen:

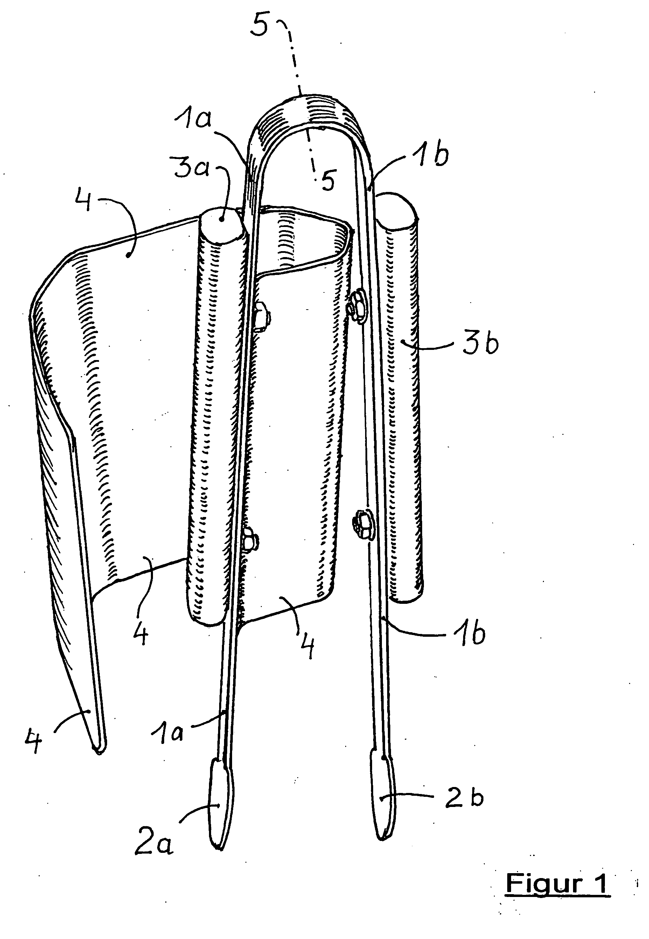

In **Figur 1** ist im Schrägbild eine Grillzange gemäß der erfinderischen Lehre dargestellt. Sie besteht aus dem ersten Stab 1 a, hier an der linken Seite gezeichnet und dem zweiten Stab 1 b, hier an der rechten Seiten dargestellt. An den zum Grill weisenden Enden der beiden Stäbe 1 a, 1 b ist jeweils eine Greiffläche 2a, 2b angeformt, mit denen das Grillgut aufgenommen wird. Die beiden anderen Enden der Stäbe 1a, 1b sind in diesem Ausführungsbeispiel durch einen angeformten, U-förmigen Metallstreifen miteinander verbunden, der als Schwenkachse 5 dient.

In Figur 1 ist gut zu erkennen, wie an den beiden Stäben 1a, 1b je ein Griff 3a, 3b befestigt ist, hier durch je zwei Schrauben.

Am linken Griff 3a ist auf die beiden Schrauben auch noch das Hitzeschild 4 aufgesetzt und ebenfalls mit der Verschraubung befestigt. In Figur 1 ist gut zu erkennen, wie sich das Hitzeschild 4 um den Griff 3a herumwölbt. Dazu ist es in unmittelbarer Nähe seiner Befestigung am Griff 3a senkrecht zur Schwenkachse 5 ausgerichtet und wölbt sich nach Erreichen einer gewissen Entfernung vom Griff 3a hier in einer Polygonalen Abwinkelung etwa in die Form einer Spirale ein, deren Abstand vom Griff 3a mit zunehmender Entfernung vom Befestigungspunkt immer größer wird. Deshalb ist die nach vorne weisende Öffnung zwischen dem Hitzeschild 4 und dem Griff 3a erheblich breiter, als der Abstand zwischen dem rechts vom Stab 1a zu sehenden Teil des Hitzeschildes 4 und dem ersten Griff 3a.

In Figur 1 ist gut zu erkennen, wie durch Druck auf die beiden Griffe 3a und 3b die beiden Stäbe 1 a und 1 b aufeinander zugeschwenkt werden und wie sie sich nach Entfall dieser Kraft selbsttätig durch die Elastizität des U-förmig gebogenen Metallstreifens im Bereich der Schwenkasche 5 wieder voneinander entfernen.

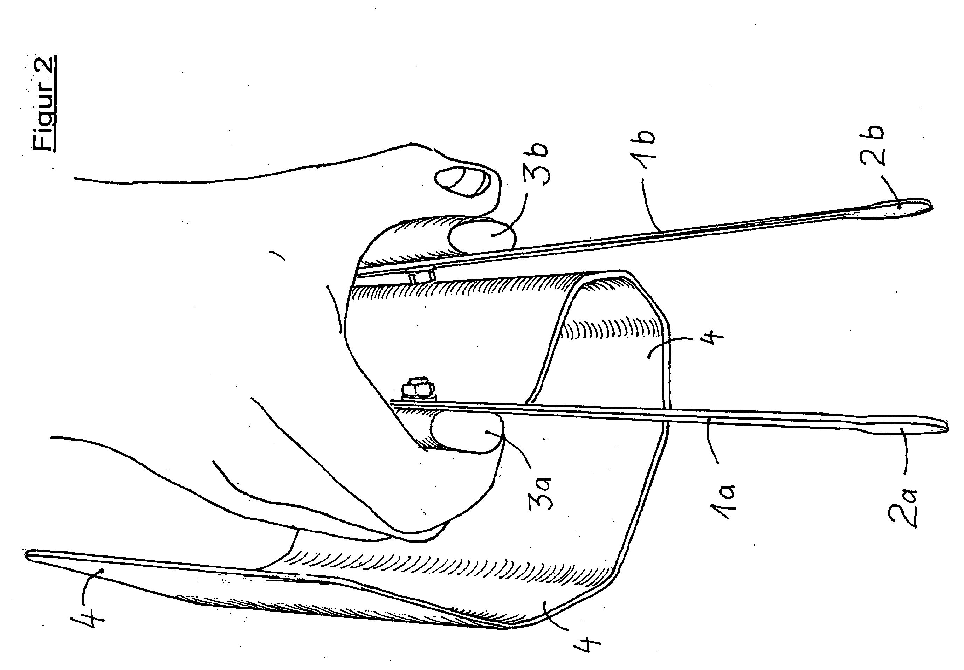

In **Figur 2** ist die selbe Grillzange wie in Figur 1, jedoch in einer etwas verschwenkten Position dargestellt, in der - im Gegensatz zur Figur 1 - die grillnahen Stirnseiten der beiden Griffe 3a und 3b sichtbar sind.

In Figur 2 ist eingezeichnet, wie die Hand eines Benutzers die Grillzange aufnimmt: Gut zu erkennen ist, wie der Daumen auf dem zweiten Griff 3b aufliegt und wie auf dem gegenüberliegenden anderen Griff 3a der Zeigefinger, der Mittelfinger und der Ringfinger aufliegen. Der fünfte Finger der Hand, der kleine Finger wird durch den Ringfinger in dieser Darstellung verdeckt, es ist jedoch plausibel, dass er hinter dem Ringfinger angeordnet sein muss.

Gut zu erkennen ist in Figur 2, wie die vier Finger vom Zeigefinger bis zum kleinen Finger in die Öffnung zwischen dem Griff 3a und dem Hitzeschild 4 eingeführt und um den Griff 3a herum gewölbt werden. Klar zu sehen ist in Figur 2, dass sich auch in diesem Zustand ein Abstand zwischen den Fingern und dem Hitzeschild 4 ergibt, der die Finger vom Hitzeschild 4 abhält und der Luft durch den verbleibenden Zwischenraum streichen lässt, sodass die Finger durch einen Luftzug durch das Innere des Hitzeschildes gekühlt werden können, was der Erwärmung des Hitzeschildes 4 durch den äußeren Kontakt mit der aufsteigenden Luft entgegenwirkt.

In Figur 2 - und auch in Figur 1 - nicht eingezeichnet ist das Grillgut, dass zwischen den beiden Greifflächen 2a und 2b aufgenommen wird.

In Figur 2 und in Figur 1 ist ebenfalls der Grill nicht eingezeichnet. In Figur 2 ist jedoch nachvollziehbar, dass es am sinnvollsten ist, wenn die erste Greiffläche 2a das Grillgut von seiner Unterseite her greift und die zweite Greiffläche 2b das Grillgut von seiner Oberseite her berührt. Dann strahlt die Hitze des Grills zuerst gegen das Hitzeschild 4, in Figur 2 also von links. Dann sind die vier Finger durch das Hitzeschild 4 geschützt und ebenso auch der Daumen, da sich das Hitzeschild 4 über die Zeichenebene hinweg nach vorne und nach hinten ausdehnt. In Figur 2 wird also deutlich, wie in einer sehr typischen Haltung der Hand des Benutzers ein einziges Hitzeschild 4 beide Stäbe 1a, 1b der erfindungsgemäßen Grillzange schützt.

In Figur 2 ist auch nachvollziehbar, wie in einer weiteren, sinnvollen Nutzerhaltung dennoch der größte Teil der Hand durch das Hitzeschild 4 thermisch geschützt wird: wenn die beiden Greifflächen 2a und 2b das Grillgut jeweils von einer Seite anfassen, dann kommt die Wärmestrahlung hinter der Zeichenebene der Figur 2 an die Grillzange heran. Dann ist gut nachvollziehbar, dass alle vier Finger auch in dieser Position hinter dem Hitzeschild sehr gut geschützt sind. Durch die nach innen weisende "Ausbeulung" des Hitzeschildes wird auch die Hand selber vor der Strahlungswärme von unten geschützt. Der Daumen wird hingegen durch den "Hitzeschatten" des zweiten Handgriffes 3b geschützt und nur die Spitze des Daumens ist der Wärmestrahlung ungeschützt ausgesetzt.

Es ist in Figur 2 jedoch sehr gut nachvollziehbar, dass die der Strahlung ausgesetzte Fläche des Daumens erheblich kleiner ist als die übrige, thermisch gut geschützte Fläche der Hand, sodass nur eine relativ geringe Wärmemenge über den Daumen in die Hand eintritt. Diese Wärmemenge kann von der Blutmenge innerhalb der Hand sehr viel besser und schneller abgeführt werden als bei einer vollständigen Erwärmung der gesamten Hand, sodass auch beim Ergreifen des Grillgutes von der Seite immer noch ein recht guter Wärmeschutz durch das Hitzeschild 4 gewährleistet wird.

### Bezugszeichenliste

- 1a: erster Stab
- 1b: zweiter Stab, beweglich mit dem ersten Stab 1a verbunden
- 2a: erste Greiffläche, am ersten Stab 1a
- 2b: zweite Greiffläche, am zweiten Stab 1b
- 3a: erster Griff, am ersten Stab 1a
- 3b: zweiter Griff, am zweiten Stab 1b
- 4: Hitzeschild, am ersten Stab 1a
- 5: Schwenkachse der Verbindung zwischen dem ersten Stab 1a und dem zweiten Stab 1b

## Patentansprüche

1. Grillzange, bestehend aus zwei Stäben (1a, 1b)
- die beweglich miteinander verbunden sind und
- die gegeneinander verschwenkbar sind und
- die jeweils an ihrem grillnahen Ende eine Greiffläche (2a, 2b) für ein Grillgut aufweisen und
- die an ihrem grillfernen Ende mit einem Griff (3a, 3b) ausgestattet sind, der als Kontaktfläche für die Finger eines Benutzers dient *und* am Stab (1a) im Bereich des Griffes (3a) ein Hitzeschild (4) angeordnet ist,
- das an der zangeninneren Seite des Stabes (1a) befestigt ist und
- das sich von dort aus um die nach außen weisende Seite des Griffes (3a) herum wölbt und
- das dabei zum Griff (3a) beabstandet ist,
**dadurch gekennzeichnet, dass**
das Hitzeschild (4) ein Hohlzylindersegment ist,
- dessen Profil etwa ¾ eines Kreises ist und
- dessen Tangente an der Stelle der Befestigung am Griff (3a) etwa parallel zur Schwenkachse (5) der beiden Stäbe (1a und 1b) werläuft.

2. Grillzange nach Anspruch 1, **dadurch gekennzeichnet, dass** das Profil des Hitzeschildes (4) etwa einer Spirale entspricht, wobei in der Nähe der Befestigung des Hitzeschildes (4) dessen Abstand zum Stab (1a) kleiner ist als am befestigungsfernen Ende des Hitzeschildes (4).

3. Grillzange nach den vorhergehenden Ansprüchen 1 oder 2, **dadurch gekennzeichnet, dass** das Profil des Hitzeschildes (4) durch ein Polygon angenähert ist.

4. Grillzange nach einem der vorhergehenden Ansprüche, **dadurch gekennzeichnet, dass** das Profil des Hitzeschildes (4) an der zu den Greifflächen (2a, 2b) weisenden Seite verschlossen ist.

5. Grillzange nach einem der vorhergehenden Ansprüche, **dadurch gekennzeichnet, dass** im Profil des Hitzeschildes (4) wenigstens eine Ebene eingeformt ist, die zur Ablage der gesamten Zange nutzbar ist.

6. Grillzange nach einem der vorhergehenden Ansprüche, **dadurch gekennzeichnet, dass** die Schwenkachse (5) am grillfernen Ende jedes Stabes (1a, 1b) angeordnet ist und ein Federelement die Stäbe (1a, 1b) im unbelasteten Zustand auseinander drückt.

7. Grillzange nach Anspruch 6, **dadurch gekennzeichnet, dass** die Funktionen der Schwenkachse (5) und des Federelementes durch einen etwa U-förmigen, dauerhaft elastischen Metallstreifen ausgeführt werden, an dessen beiden Enden je ein Stab (1a, 1b) befestigt ist.

8. Grillzange nach Anspruch 7, **dadurch gekennzeichnet, dass** der Metallstreifen und die Stäbe (1a und 1b) einstückig geformt sind.

9. Grillzange nach einem der vorhergehenden Ansprüche, **dadurch gekennzeichnet, dass** die Stäbe (1a, 1b) in ihrer Längsrichtung profiliert sind.

10. Grillzange nach einem der vorhergehenden Ansprüche, **dadurch gekennzeichnet, dass** die Schwenkachse (5) zwischen den Greifflächen (2a, 2b) und den Griffen (3a, 3b) angeordnet ist.

11. Grillzange nach einem der vorhergehenden Ansprüche, **dadurch gekennzeichnet, dass** die Griffe (3a und 3b) je eine Öffnung aufweisen.

12. Grillzange nach Anspruch 11, **dadurch gekennzeichnet, dass** die Öffnung im Griff (3a) innerhalb des Hitzeschildes angeordnet ist und in Längsrichtung des Stabes (1a) wenigstens etwa doppelt so lang ist wie die Öffnung im Griff (3b).

13. Grillzange nach einem der vorhergehenden Ansprüche, **dadurch gekennzeichnet, dass** der Hitzeschild (5) wahlweise auf der einen oder der anderen Seite des Stabes (1a) befestigt werden kann.

14. Grillzange nach einem der vorhergehenden Ansprüche, **dadurch gekennzeichnet, dass** der Griff (3a) thermisch von dem Stab (1a) und von dem Hitzeschild (5) isoliert ist und durch wenigstens
- eine Schraube und/oder
- einen Dübel und/oder
- einen Rasthaken und/oder
- eine Niete und/oder
- einen angeformten Stift mit einer Querbohrung und einem Keil und/oder
- einer Klebstoffschicht und/oder
- einer umgebogenen Blechlasche
mit wenigstens einem der beiden Elemente verbunden ist

15. Grillzange nach einem der vorhergehenden Ansprüche, **dadurch gekennzeichnet, dass** die Greifflächen (2a und 2b) jeweils ein längliches Element sind,
- deren Längsachsen gegenüber der Längsachse der jeweiligen Stäbe (1a und 1b) in einem Winkel verlaufen und
- deren freie Enden in Bezug auf die Stäbe (1a, 1b) in die gleiche Richtung weisen, wie die geschlossene Seite des Hitzeschildes (4).

16. Verfahren zur Nutzung einer Grillzange nach einem der vorgehenden Ansprüche, **dadurch gekennzeichnet, dass**
- im ersten Schritt von der Hand eines Nutzers die vier Finger vom Zeigefinger bis zum kleinen Finger auf der Innenseite des Hitzeschildes (4) eingeführt und um den Griff (3a) gelegt werden und
- im zweiten Schritt der Daumen der Benutzerhand mit dem anderen Griff (3b) in Kontakt gebracht wird und
- im dritten Schritt durch Annähern der beiden Griffe (3a, 3b) die Zange geschlossen wird und durch Entfernen der beiden Griffe die Zange wieder geöffnet wird.

## Claims

1. Grill tongs consisting of two rods (1 a, 1 b)
- which are movably connected and
- which can be pivoted relative to each other and
- which in each case have a gripping surface (2a, 2b) for an item to be grilled at the end of the rods near the grill
- which are equipped with a handle (3a, 3b) at the end of the rods remote from the grill, which handle is used as a contact surface for the fingers of a user and
a heat shield (4) is disposed on the rod (1 a) in the region of the handle (3a),
- which is fastened on that side of the rod (1a) that is on the interior of the tongs and
- from there curves around the outwardly facing side of the handle (3a) and
- is thereby at a distance from the handle 3a,
**characterised in that** the heat shield (4) is a hollow segment,
- of which the profile is approximately ¾ of a circle and
- the tangent at the point of fastening to the handle (3a) is approximately parallel to the pivot axis (5) of the two rods (1 a and 1b).

2. Grill tongs according to claim 1, **characterised in that** the profile of the heat shield (4) approximately corresponds to a spiral, the distance from rod (1a) being smaller in the vicinity of the fastening of the heat shield (4) than at that end of the heat shield (4) that is remote from the fastening.

3. Grill tongs according to the preceding claims 1 or 2, **characterised in that** the profile of the heat shield (4) is approximated by a polygon.

4. Grill tongs according to one of the preceding claims, **characterised in that** the profile of the heat shield (4) at that side facing the gripping surfaces (2a, 2b) is closed.

5. Grill tongs according to one of the preceding claims, **characterised in that** at least one plane, which can be used for laying down the entire tongs, is formed in the profile of the heat shield (4).

6. Grill tongs according to one of the preceding claims, **characterised in that** the pivot axis (5) is disposed at that end of each rod (1a, 1b) that is remote from the grill, and a spring element forces the rods (1a, 1b) apart in the unloaded state.

7. Grill tongs according to claim 6, **characterised in that** the function of the pivot axis (5) and of the spring element is performed by an approximately U-shaped, permanently elastic metal strip, at the two ends of which a rod (1 a, 1 b) in each case is fastened.

8. Grill tongs according to claim 7, **characterised in that** the metal strip and the rods (1a and 1b) are formed in one piece.

9. Grill tongs according to one of the preceding claims, **characterised in that** the rods (1a, 1b) are profiled in their longitudinal direction.

10. Grill tongs according to one of the preceding claims, **characterised in that** the pivot axis (5) is disposed between the gripping surfaces (2a, 2b) and the handles (3a, 3b).

11. Grill tongs according to one of the preceding claims, **characterised in that** the handles (3a, 3b) have an opening in each case.

12. Grill tongs according to claim 11, **characterised in that** the opening in the handle (3a) is disposed within the heat shield and, in the longitudinal direction of the rod (1a), is at least twice as long as the opening in handle (3b).

13. Grill tongs according to one of the preceding claims, **characterised in that** the heat shield (5) can be optionally fastened on one or the other side of the rod (1a).

14. Grill tongs according to one of the preceding claims, **characterised in that** the handle (3a) is thermally insulated from the rod (1a) and from the heat shield (5) and is connected to at least one of the two elements by at least
- a screw and/or
- a dowel and/or
- a detent hook and/or
- a rivet and/or
- an integrally moulded pin with a transverse bore and a wedge
and/or
- an adhesive layer and/or
- a curved metal lug.

15. Grill tongs according to one of the preceding claims, **characterised in that** the gripping surfaces (2a and 2b) are in each case an elongated element
- of which the longitudinal axes extend at an angle with respect to the longitudinal axis of the rods (1a and 1b) in each case and
- the free ends of which point in the same direction with respect to the rods (1a, 1 b) as the closed side of the heat shield (4).

16. Method for using grill tongs according to one of the preceding claims, **characterised in that**
- in the first step, of a user's hand, the four fingers from the index finger to the little finger are introduced on the inner side of the heat shield (4) and placed around the handle (3a) and
- in the second step the thumb of the user's hand is brought into contact with the other handle (3b) and
- in the third step, by bringing the two handles (3a, 3b) together, the tongs are closed and, by bringing the two handles apart, the tongs are opened again.

## Revendications

1. Pince pour barbecue constituée de deux tiges (1a, 1 b)
■ qui sont reliées de façon mobile l'une à l'autre et
■ qui peuvent pivotées l'une contre l'autre et
■ qui présentent chacune, à leur extrémité proche du barbecue, une surface de préhension (2a, 2b) pour un produit à griller et
■ qui sont équipées à leur extrémité éloignée du barbecue d'une poignée (3a, 3b) qui sert de surface de contact pour les doigts d'un utilisateur, un bouclier thermique (4) étant disposé sur la tige (1a) dans la zone de la poignée (3a),
■ bouclier qui est fixé sur la face interne de la tige (1a) et
■ qui se courbe de là autour de la face orientée vers l'extérieur de la poignée (3a) et
■ qui est disposée à cette occasion à une certaine distance de la poignée (3a)
**caractérisée par le fait que**
■ le bouclier thermique (4) est un segment de cylindre creux,
■ dont le profil est environ ¾ d'un cercle et
■ dont la tangente, à l'endroit de la fixation à la poignée (3a), suit un tracé environ parallèle à l'axe de pivotement (5) des deux tiges (1a et 1b).

2. Pince pour barbecue selon la revendication 1, **caractérisée par le fait que** le profil du bouclier thermique (4) correspond à peu près à une spirale, sachant qu'à proximité de la fixation du bouclier thermique (4) dont la distance par rapport à la tige (1a) est plus faible que sur l'extrémité du bouclier thermique éloignée de l'extrémité.

3. Pince pour barbecue selon une des revendications précédentes 1 ou 2, **caractérisée par le fait que** le profil du bouclier thermique (4) est rapproché d'un polygone.

4. Pince pour barbecue selon une des revendications précédentes, **caractérisée par le fait que** le profil du bouclier thermique (4) sur le côté orienté vers les surfaces de préhension (2a, 2b) est fermé.

5. Pince pour barbecue selon une des revendications précédentes, **caractérisée par le fait qu'**au moins un niveau est formé dans le profil du bouclier thermique (4), qui peut être utilisé pour déposer l'ensemble de la pince.

6. Pince pour barbecue selon une des revendications précédentes, **caractérisée par le fait que** l'axe de pivotement (5) est disposé sur l'extrémité éloignée du barbecue de chaque tige (1a, 1 b), un élément de ressort pressant les tiges (1a, 1 b) l'une loin de l'autre lorsqu'il n'est pas chargé.

7. Pince pour barbecue selon la revendication 6, **caractérisée par le fait que** les fonctions de l'axe de pivotement (5) et de l'élément de ressort sont assurées par une bande métallique à élasticité durable, ayant à peu près la forme d'un U, aux extrémités desquelles une tige (1a, 1b) est fixée.

8. Pince pour barbecue selon la revendication 7, **caractérisée par le fait que** les bandes métalliques et les tiges (1a et 1 b) sont formées d'une seule pièce.

9. Pince pour barbecue selon une des revendications précédentes, **caractérisée par le fait que** les tiges (1a, 1 b) sont profilées dans leur sens longitudinal.

10. Pince pour barbecue selon une des revendications précédentes, **caractérisée par le fait que** l'axe pivotant (5) est disposé entre les surfaces de préhension (2a, 2b) et les poignées (3a, 3b).

11. Pince pour barbecue selon une des revendications précédentes, **caractérisée par le fait que** chacune des poignées (3a et 3b) présente une ouverture.

12. Pince pour barbecue selon la revendication 11, **caractérisée par le fait que** l'ouverture dans la poignée (3a) est disposée à l'intérieur du bouclier thermique et est au moins deux fois plus longue que l'ouverture dans la poignée (3b)

13. Pince pour barbecue selon une des revendications précédentes, **caractérisée par le fait que** le bouclier thermique (5) peut être au choix fixé sur l'un ou l'autre côté de la tige (1a).

14. Pince pour barbecue selon une des revendications précédentes, **caractérisée par le fait que** la poignée (3a) est isolée thermiquement de la tige (1a) et du bouclier thermique (5) et est reliée à au moins un des deux éléments par au moins
■ une vis et/ou
■ une cheville et/ou
■ un crochet d'arrêt et/ou
■ un rivet et/ou
■ une goupille formée avec un perçage transversal et une cale et/ou
■ une couche de colle et/ou
■ une languette de tôle recourbée.

15. Pince pour barbecue selon une des revendications précédentes, **caractérisée par le fait que** les surfaces de préhension (2a et 2b) sont à chaque fois un élément longitudinal
■ dont les axes longitudinaux courent, vis-à-vis de l'axe longitudinal des tiges respectives et
■ dont les extrémités libres, par rapport aux tiges (1a, 1b), sont orientées dans la même direction que le côté fermé du bouclier thermique (4).

16. Procédé destiné à utiliser une pince pour barbecue selon une des revendications précédentes, **caractérisée par le fait que**
■ dans une première étape, les quatre doigts de la main d'un utilisateur, de l'index à l'auriculaire, sont introduits sur la face intérieure du bouclier thermique (4) et autour de la poignée (3a) et
■ dans une deuxième étape, le pouce de la main de l'utilisateur est amenée en contact avec l'autre poignée (3b) et
■ dans une troisième étape la pince est fermée par rapprochement des deux poignées (3a, 3b), la pince étant à nouveau ouverte lors du retrait des deux poignées.
